(19) Europäisches Patentamt
European Patent Office
Office européen des brevets

(11) **EP 3 770 626 A1**

(12) **DEMANDE DE BREVET EUROPEEN**

(43) Date de publication:
**27.01.2021 Bulletin 2021/04**

(51) Int Cl.:
*G01S 1/14* (2006.01)    *G01S 1/02* (2010.01)
*G01S 19/15* (2010.01)

(21) Numéro de dépôt: **20187119.1**

(22) Date de dépôt: **22.07.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **24.07.2019 FR 1908391**

(71) Demandeur: **THALES**
**92400 Courbevoie (FR)**

(72) Inventeurs:
• **GANILLE, Thierry**
**33700 MERIGNAC (FR)**
• **DUMAS, Pierre-Yves**
**33700 MERIGNAC (FR)**
• **GAULTIER, Philippe**
**33700 MERIGNAC (FR)**

(74) Mandataire: **Lavoix**
**2, place d'Estienne d'Orves**
**75441 Paris Cedex 09 (FR)**

(54) **PROCÉDÉ DE VALIDATION D'AU MOINS UNE DONNÉE DE POSITION PRÉDÉTERMINÉE STOCKÉE AU SEIN D'UNE BASE DE DONNÉES D'UN AÉRONEF, PROGRAMME D'ORDINATEUR ET DISPOSITIF ASSOCIÉS**

(57) L'invention concerne un procédé (60) de validation d'au moins une position stockée au sein d'une base de données d'un aéronef (10) comprenant un système (12) de positionnement par satellite, la base de données (14) contenant au moins une position de balise de radionavigation et une position de seuil de piste et de seuil de piste opposé d'une piste, sur laquelle l'aéronef est destiné à atterrir, la validation (62, 74, 82, 90) de ladite au moins une position comprenant une vérification de cohérence entre au moins :
- un signal reçu par l'aéronef d'une balise de radionavigation associée à ladite au moins une position, et
- la position (P) de l'aéronef fournie par le système de positionnement par satellite, et
- la valeur de la position stockée au sein de la base de données.

FIG.6

## Description

La présente invention concerne un procédé de validation d'au moins une donnée de position prédéterminée stockée au sein d'une base de données d'un aéronef, l'aéronef comprenant un système de positionnement par satellite, la base de donnée contenant au moins une position de balise de radionavigation et une position de seuil de piste et de seuil de piste opposé d'une piste, sur laquelle l'aéronef est destiné à atterrir, le procédé de validation étant mis en œuvre par un dispositif électronique de validation embarqué à bord de l'aéronef et propre à accéder à la base de données.

L'invention concerne également un produit programme d'ordinateur associé.

L'invention concerne également un dispositif électronique de validation d'au moins une donnée de position prédéterminée stockée au sein d'une base de données d'un aéronef comprenant un système de positionnement par satellite, la base de donnée contenant au moins une position de balise de radionavigation et une position de seuil de piste et de seuil de piste opposé d'une piste, sur laquelle l'aéronef est destiné à atterrir, le dispositif électronique de validation embarqué à bord de l'aéronef étant propre à accéder à la base de donnée.

L'invention concerne également un aéronef comprenant un tel dispositif électronique de validation.

Plus particulièrement, l'invention se situe dans le domaine technique des systèmes de guidage d'un aéronef dans les phases d'approche sans visibilité. De tels systèmes de guidage s'appuient sur des équipements de navigation comme un instrument de radionavigation (connu sous l'acronyme anglais ILS pour *Instrument Landing System)*, un système de positionnement par satellites (connu sous l'acronyme anglais GNSS pour *Global Navigation Satellite System*) et sur une Interface-Homme-Système (connu sous l'acronyme IHS) de pilotage d'un aéronef comportant une représentation synthétique de l'environnent extérieur. Une telle représentation est par exemple connue sous l'acronyme anglais SVS (*Synthetic Vision System*) et peut être affichée sur un afficheur tête basse ou tête haute, porté ou non.

Plus précisément, l'invention porte notamment sur la combinaison de technologies connue sous l'acronyme anglais SVGS (*Synthetic Vision Guidance System),* qui est une combinaison de plusieurs technologies notamment la technologie SVS précitée, une visualisation du guidage de vol (Flight Guidance Display), des moniteurs de position haute précision, et permet de baisser les minima d'approche ILS de catégorie I de 200 pieds à 150 pieds sous réserve de satisfaire en vol des niveaux d'intégrité et de délai d'alerte connu sous l'acronyme anglais TTA (*Time to Alert*) équivalents à ceux démontrés sur des installations sol permettant de réaliser actuellement ce type d'approche.

La présente invention a pour but de proposer une solution pour remplir cette exigence d'intégrité en validant l'exactitude d'au moins une donnée de position prédéterminée stockée dans une base de données de l'aéronef, ladite au moins une donnée de position étant propre à être utilisée pour sécuriser le fonctionnement (i.e. l'affichage fourni est exact, notamment l'affichage de la piste d'atterrissage) d'un système de vision synthétique de l'aéronef, et/ou pour superviser une trajectoire d'approche de l'aéronef.

Autrement dit, la présente invention a pour but d'augmenter l'intégrité de la base de donnée embarquée à bord de l'aéronef et propre à être utilisée par les technologies SVS ou encore SVGS sans recourir à deux bases de données indépendantes.

À cet effet, l'invention a pour objet un procédé de validation d'au moins une donnée de position prédéterminée stockée au sein d'une base de données d'un aéronef, l'aéronef comprenant un système de positionnement par satellite, la base de données contenant au moins une position de balise de radionavigation et une position de seuil de piste et de seuil de piste opposé d'une piste, sur laquelle l'aéronef est destiné à atterrir, le procédé de validation étant mis en œuvre par un dispositif électronique de validation embarqué à bord de l'aéronef et propre à accéder à la base de données, la validation de ladite au moins une donnée de position prédéterminée comprenant une vérification de cohérence entre au moins :

- un signal reçu par l'aéronef d'une balise de radionavigation associée à ladite au moins une donnée de position prédéterminée, et
- la position de l'aéronef fournie par le système de positionnement par satellite, et
- la valeur de la donnée de position prédéterminée stockée au sein de la base de données.

Suivant d'autres aspects avantageux de l'invention, le procédé de validation d'au moins une donnée de position prédéterminée stockée au sein d'une base de données de l'aéronef comprend une ou plusieurs des caractéristiques suivantes, prise(s) isolément ou suivant toutes les combinaisons techniquement possibles :

- ladite au moins une donnée de position prédéterminée stockée au sein de la base de données correspond à un élément appartenant au groupe comprenant au moins :

  - une position d'un radiophare d'alignement de piste associé à ladite piste,
  - une position d'un radiophare d'alignement de descente associé à ladite piste,
  - une position d'un équipement de mesure de distance associé à ladite piste,
  - une position du seuil de la piste,
  - une position du seuil de piste opposé ;

- lorsque ladite au moins une donnée de position prédéterminée stockée au sein de la base de données correspond à la position du radiophare d'alignement de piste, la vérification de cohérence comprend, préalablement à l'interception par l'aéronef de l'axe de piste, lorsque la valeur du signal reçu par l'aéronef du radiophare d'alignement de piste est comprise entre deux premières valeurs de signal prédéterminées où le signal présente une variation linéaire :

- la détermination d'un point virtuel localisé sur la perpendiculaire à l'axe de piste passant par le seuil de piste, la distance au sol de ce point virtuel au centre du seuil de piste étant proportionnelle à la valeur du signal reçu par l'aéronef du radiophare d'alignement de piste,
- le calcul d'une position estimée du radiophare d'alignement de piste correspondant à l'intersection de la première droite passant par le point virtuel et la position de l'aéronef avec la deuxième droite passant par le seuil de la piste et le seuil de piste opposé,
- la détermination d'une distance entre la position estimée du radiophare d'alignement de piste et le projeté orthogonal sur l'axe longitudinal de la piste de la position du radiophare d'alignement de piste stockée dans la base de données,
- la validation du projeté orthogonal, sur l'axe longitudinal de la piste, de la position du radiophare d'alignement de piste stockée dans la base de données si la distance est inférieure à une première valeur de distance prédéterminée ;

- le calcul de la distance entre la position estimée du radiophare d'alignement de piste et le projeté orthogonal sur l'axe longitudinal de la piste de la position du radiophare d'alignement de piste stockée dans la base de données est réitéré cycliquement ;
- lorsque ladite au moins une donnée de position prédéterminée stockée au sein de la base de données correspond à :

  - une position du radiophare d'alignement de piste, et
  - une position du seuil de la piste, et
  - une position du seuil de piste opposé,

  la vérification de cohérence comprend, à partir de la position de l'aéronef, et après l'interception par l'aéronef de l'axe de piste lorsque la valeur du signal reçu par l'aéronef du radiophare d'alignement de piste est égale à zéro à un premier facteur d'incertitude prédéterminé près, au moins un calcul de relèvement de l'aéronef vers :

  - le seuil de piste,
  - le seuil de piste opposé,
  - le radiophare d'alignement de piste ;

- la vérification de cohérence comprend en outre :

la validation, à une première marge d'erreur prédéterminée près, de la position, latéralement à l'axe de la piste, du radiophare d'alignement de piste, et de la position, latéralement à l'axe de la piste, du seuil de la piste, et de la position, latéralement à l'axe de la piste, du seuil de piste opposé stockées dans la base de données, en cas d'égalité du :

- cap vrai de la piste, obtenu à partir du seuil de piste et du seuil de piste opposé, avec
- les relèvements de l'aéronef vers le seuil de piste, vers le seuil de piste opposé, vers le radiophare d'alignement de piste,

et/ou
la validation, à une deuxième marge d'erreur prédéterminée près, de la position, latéralement à l'axe de la piste, du radiophare d'alignement de piste, et de la position, latéralement à l'axe de la piste, du seuil de la piste, et de la position, latéralement à l'axe de la piste, du seuil de piste opposé stockées dans la base de données, en cas d'égalité du :

- cap d'une route suivie par l'aéronef fourni par le système de positionnement par satellite lorsque l'aéronef est au préalable établi et stabilisé sur le centre du faisceau du radiophare d'alignement de piste, avec
- les relèvements de l'aéronef vers le seuil de piste, vers le seuil de piste opposé, vers le radiophare d'alignement de piste ;

- lorsque ladite au moins une donnée de position correspond à :

  - une position du radiophare d'alignement de descente, et/ou
  - une position de l'équipement de mesure de distance,

  la vérification de cohérence comprend, après l'interception par l'aéronef de l'axe de piste lorsque la valeur du signal reçu par l'aéronef du radiophare d'alignement de piste est égale à zéro à un deuxième facteur d'incertitude prédéterminé près, et lorsque la valeur du signal reçu par l'aéronef du radiophare d'alignement de descente est égale à zéro à un troisième facteur d'incertitude prédéterminé près,
  un calcul ou plusieurs calculs pour des positions distinctes de l'aéronef :

  - d'une première distance au sol entre l'aéronef et le radiophare d'alignement de descente et/ou l'équipement de mesure de distance respectivement en utilisant une distance fournie par l'équipement de mesure de distance et une valeur de pente d'approche de l'aéronef prédéterminée ou en utilisant :

- l'altitude de l'aéronef fournie par le système de positionnement,
- une altitude du radiophare d'alignement de descente et/ou de l'équipement de mesure de distance stockée au sein de la base de données,
- une valeur de pente d'approche de l'aéronef prédéterminée, et

- d'une deuxième distance au sol entre l'aéronef et le radiophare d'alignement de descente et/ou l'équipement de mesure de distance respectivement, à partir :

  - des coordonnées en latitude et longitude du radiophare d'alignement de descente et/ou de l'équipement de mesure de distance stockées dans la base de données,
  - de la position de l'aéronef,

et la validation de la position, longitudinalement à l'axe de la piste, du radiophare d'alignement de descente et/ou de l'équipement de mesure de distance respectivement, stockées dans la base de données, lorsque la différence, ou la différence moyenne, entre la première distance au sol et la deuxième distance au sol associées à une même position de l'aéronef, est inférieure à une deuxième valeur de distance prédéterminée.

- la vérification de cohérence comprend en outre le calcul au préalable de la distance longitudinale sur l'axe de la piste entre le seuil de la piste et le radiophare d'alignement de descente à partir des coordonnées en latitude et longitude du seuil de piste et du radiophare d'alignement de descente stockées dans la base de données, et, en cas de validation de la position, longitudinalement à l'axe de la piste, du radiophare d'alignement de descente, la validation, à une troisième marge d'erreur prédéterminée près, de la position, longitudinalement à l'axe de la piste, du seuil de la piste stockée dans la base de données en cas d'égalité, à une valeur de distance longitudinale prédéterminée, de la distance longitudinale sur l'axe de la piste entre le seuil de la piste et le radiophare d'alignement de descente.

L'invention a également pour objet un programme d'ordinateur comportant des instructions logicielles qui, lorsqu'elles sont exécutées par un ordinateur, mettent en œuvre un procédé de validation tel que défini ci-dessus.

L'invention a également pour objet un dispositif électronique de validation d'au moins une donnée de position prédéterminée stockée au sein d'une base de données d'un aéronef comprenant un système de positionnement par satellite, la base de données contenant au moins une position de balise de radionavigation et une position de seuil de piste et de seuil de piste opposé d'une piste, sur laquelle l'aéronef est destiné à atterrir, le dispositif électronique de validation embarqué à bord de l'aéronef étant propre à accéder à la base de données et comprenant au moins un module électronique de validation de ladite au moins une donnée de position prédéterminée, le module électronique de validation étant propre à mettre en œuvre une vérification de cohérence entre au moins :

- un signal reçu par l'aéronef d'une balise de radionavigation associée à ladite au moins une donnée de position prédéterminée, et
- la position de l'aéronef fournie par le système de positionnement par satellite, et
- la valeur de la donnée de position prédéterminée stockée au sein de la base de données.

L'invention a également pour objet un aéronef comprenant un tel dispositif électronique de validation.

Ces caractéristiques et avantages de l'invention apparaîtront à la lecture de la description qui va suivre, donnée uniquement à titre d'exemple, et faite en référence aux dessins annexés, sur lesquels :

[Fig 1] la figure 1 est une vue schématique d'un dispositif électronique de de validation d'au moins une donnée de position prédéterminée stockée au sein d'une base de données d'un aéronef selon l'invention ;
[Fig 2] [Fig 3] [Fig 4] [Fig 5] les figures 2 à 5 illustrent des exemples de vérifications de différents types de donnée de position prédéterminée stockée au sein de la base de données de l'aéronef mises en œuvre par le dispositif électronique de validation de la figure 1;
[Fig 6] la figure 6 est une représentation est un organigramme d'un procédé de validation d'au moins une donnée de position prédéterminée stockée au sein d'une base de données d'un aéronef selon l'invention.

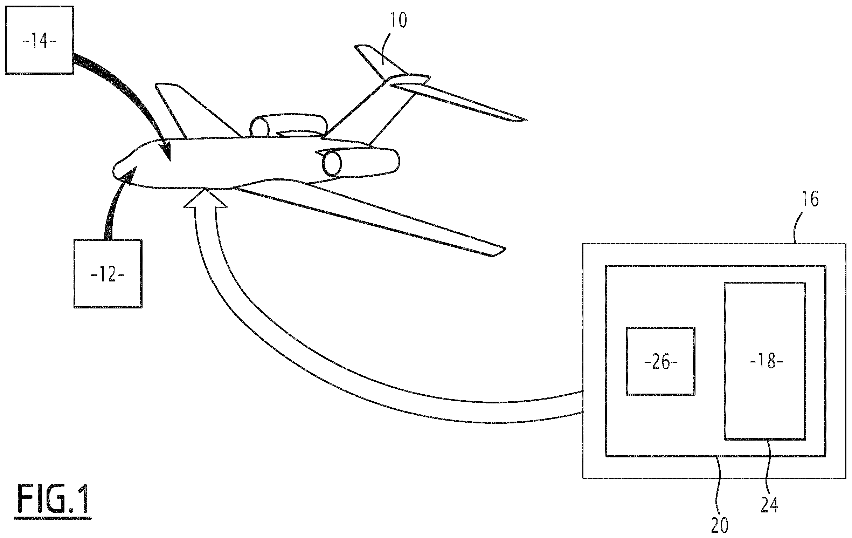

La figure 1 illustre un aéronef 10. On entend par aéronef, tout engin volant dans l'atmosphère terrestre et notamment un avion, un hélicoptère ou un drone. L'aéronef est pilotable par au moins un pilote directement à partir du cockpit de celui-ci (cas d'un avion ou d'un hélicoptère) ou bien à distance, à partir par exemple d'un centre de contrôle terrestre (cas d'un drone ou de tout autre engin pilotable à distance).

Dans l'exemple de réalisation décrit ci-dessous, l'aéronef est un avion.

Selon l'exemple de la figure 1, l'aéronef 10 comprend un système 12 de positionnement par satellite (connu sous l'acronyme anglais GNSS pour *Global Na-*

*vigation Satellite System*), tel que le système GPS (de l'anglais *Global Positioning System*) ou encore le système Galileo, propre à déterminer en temps réel, ou quasi temps réel, la position P de l'aéronef 10 en altitude, longitude, latitude.

L'aéronef 10 comprend également une base de données 14 contenant au moins une position de balise de radionavigation (i.e. radiophare, équipement de mesure à distance, etc.) et une position de seuil de piste et de seuil de piste opposé d'une piste sur laquelle l'aéronef est destiné à atterrir.

En particulier, une telle base de données est notamment associée à l'instrument de bord embarqué pour la planification de vol (connu sous l'acronyme FMS pour *Flight Management System*), ou à la technologie SVS précitée ou encore à un système d'avertissement et d'évitement du relief (connu sous l'acronyme anglais TAWS pour *Terrain Avoidance Warning System*), ou encore selon un aspect préférentiel est une base de données commune à ces deux systèmes SVS et TAWS, et ce sans recourir à deux bases de données indépendantes.

Plus précisément, ladite au moins une donnée de position prédéterminée stockée au sein de la base de données 14, et dont l'intégrité est propre à être validée selon la présente invention, correspond à un élément appartenant au groupe comprenant au moins :

- une position d'un radiophare d'alignement de piste associé à la piste sur laquelle l'aéronef est destiné à atterrir,
- une position d'un radiophare d'alignement de descente associé à ladite piste,
- une position d'un équipement de mesure de distance associé à ladite piste,
- une position du seuil de la piste,
- une position du seuil de piste opposé,
- etc.

Selon la présente invention, l'aéronef 10 comprend en outre un dispositif 16 électronique de validation d'au moins une donnée de position prédéterminée stockée au sein de la base de données 14 d'un aéronef 10 selon l'invention.

Un tel dispositif électronique 16 est propre à être connecté via une liaison filaire ou sans fil à la base de données 14 pour en extraire les données de position qui y sont stockée afin d'en vérifier la validité en temps réel ou quasiment en temps réel.

Plus précisément, un tel dispositif 16 électronique de validation comprend au moins un module 18 électronique de validation de ladite au moins une donnée prédéterminée, le module électronique de validation 18 étant propre à mettre en œuvre une vérification de cohérence entre au moins :

- un signal reçu par l'aéronef 10 d'une balise de radionavigation associée à ladite au moins une donnée

- de position prédéterminée, et
- la position P de l'aéronef fournie par le système 12 de positionnement par satellite, et
- la valeur de la donnée de position prédéterminée stockée au sein de la base de données.

Selon une première variante, un même module électronique 18 de validation est propre à mettre en œuvre la vérification de cohérence précitée quelle que soit la nature de la donnée de position à valider. En d'autres termes, selon cette première variante, un même module électronique 18 sera utilisé pour valider une position d'un radiophare d'alignement de piste associé à la piste sur laquelle l'aéronef est destiné à atterrir, une position d'un radiophare d'alignement de descente associé à ladite piste, une position d'un équipement de mesure de distance associé à ladite piste, une position du seuil de la piste, une position du seuil de piste opposé.

Selon une deuxième variante, le dispositif électronique de validation 16 comprend autant de modules électroniques de validation 18 que de types de donnée de position différents à valider. En d'autres termes, selon cette deuxième variante, le dispositif électronique de validation 16 comprend par exemple cinq modules électroniques de validation 18 distincts dédiés respectivement à la validation d'une position d'un radiophare d'alignement de piste associé à la piste sur laquelle l'aéronef est destiné à atterrir, d'une position d'un radiophare d'alignement de descente associé à ladite piste, d'une position d'un équipement de mesure de distance associé à ladite piste, d'une position du seuil de la piste, d'une position du seuil de piste opposé.

Dans l'exemple de la figure 1, ledit au moins un module électronique de validation 18 est réalisé sous forme d'un logiciel, ou d'une brique logicielle exécutable au sein d'une unité de traitement 20 du dispositif électronique 16 embarqué à bord de l'aéronef 10. L'unité de traitement 20 comprend par ailleurs une mémoire 24 apte à stocker un tel logiciel de validation et un processeur 26 propre à exécuter ce logiciel pour renforcer le niveau d'intégrité des données de position stockées dans la base de données 14, la ou les donnée(s) de position étant propre à être utilisée(s) par la suite pour sécuriser le fonctionnement (i.e. l'affichage fourni) d'un système de vision synthétique SVS de l'aéronef 10, et/ou pour superviser une trajectoire d'approche de l'aéronef 10.

En variante, le module de validation 18 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit*).

Lorsqu'au moins une partie du dispositif électronique 16 embarqué à bord de l'aéronef 10 est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Selon un aspect particulier, lorsque ladite au moins une donnée de position prédéterminée stockée au sein de la base de données 14 correspond à la position du radiophare d'alignement de piste (un tel radiophare étant connu sous le nom anglais LOC ou LOCALIZER), le module électronique de validation 18 est propre à mettre en œuvre une vérification de cohérence spécifique.

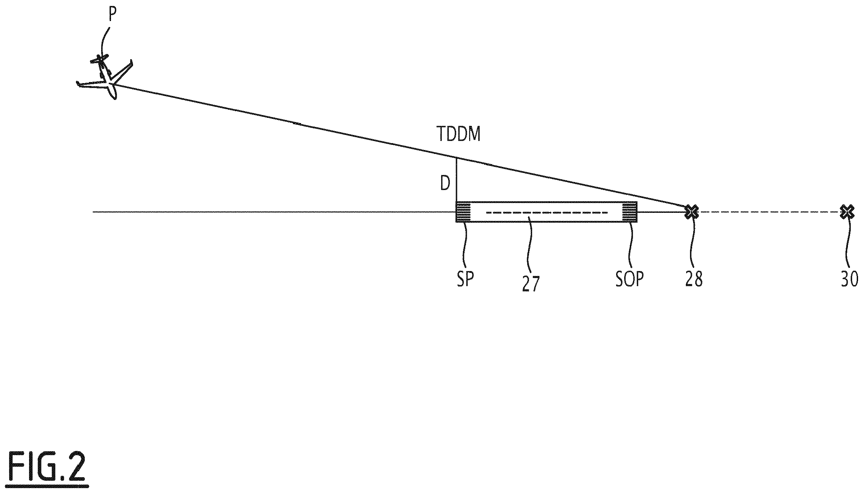

Un tel premier traitement spécifique mis en œuvre par le module électronique de validation 18 du dispositif électronique 16 selon la présente invention est notamment illustré par la figure 2 représentant une vue de dessus du sol et de la piste 27, et basé sur les propriétés du signal LOC émis par le radiophare d'alignement de piste, lorsque ce signal LOC est aligné avec l'axe de la piste 27, un tel signal LOC étant défini par le document 8168 de l'organisation de l'aviation civile internationale (ICAO en anglais), la linéarité de la variation du signal LOC par rapport au déplacement angulaire de l'aéronef 10 et son étalonnage au seuil de piste est une valeur connue, en général de cent cinq mètres d'écart latéral, correspondent à un signal LOC de 0.155 DDM (différence de taux de modulation).

Plus précisément, le module électronique de validation 18 est propre à mettre en œuvre un tel premier traitement, préalablement à l'interception par l'aéronef 10 de l'axe de piste 27, lorsque la valeur du signal LOC reçu par l'aéronef 10 du radiophare d'alignement de piste est comprise entre deux premières valeurs de signal prédéterminées où le signal présente une variation linéaire, par exemple lorsque la valeur du signal LOC est comprise entre 0,15 et 0,2 DDM, valeurs choisies pour être dans la partie linéaire du signal LOC tout en étant le plus éloigné de l'axe de piste.

Pour ce faire, le module électronique de validation 18 détermine tout d'abord un point virtuel TDDM localisé sur la perpendiculaire à l'axe de piste 27 passant par le seuil de piste SP, la distance D au sol (en mètres) de ce point virtuel TDDM au centre du seuil de piste étant proportionnelle à la valeur du signal reçu par l'aéronef 10 du radiophare d'alignement de piste LOC, telle que :

$$D = \frac{LOC}{0.155} \times 105.$$

En particulier, le module électronique de validation 18 est propre à calculer les coordonnées en latitude et longitude du point virtuel TDDM à partir de l'axe de piste et des coordonnées du seuil de piste SP stockées dans la base de données, l'axe de piste étant lui-même obtenu à partir des coordonnées en latitude et longitude du seuil de piste SP et du seuil de piste opposé SOP.

Puis, tel qu'illustré sur la figure 2, le module électronique de validation 18 est propre à poursuivre ce premier traitement spécifique de validation de la position du radiophare d'alignement de piste stockée dans la base de données 14 en calculant une position 28 estimée du radiophare d'alignement de piste correspondant à l'intersection de la première droite passant par le point virtuel TDDM et la position P de l'aéronef avec la deuxième droite passant par le seuil de la piste SP et le seuil de piste opposé SOP. Pour ce faire, toute formule classique de calcul d'intersection de deux droites à partir des coordonnées en latitude et longitude des quatre points correspondant à la position P de l'aéronef 10, la position du point virtuel TDDM précédemment déterminée, et des positions de seuil de piste SP et de seuil de piste opposé SOP stockées toutes deux dans la base de données 14 et supposée à ce stade correctes par le module électronique de validation 18.

Le module électronique de validation 18 est propre à poursuivre ce premier traitement spécifique de validation de la position du radiophare d'alignement de piste stockée dans la base de données 14 en déterminant une distance entre la position 28 estimée du radiophare d'alignement de piste et le projeté orthogonal 30 sur l'axe longitudinal de la piste 27 de la position du radiophare d'alignement de piste stockée dans la base de données. Il est à noter qu'en principe la position du radiophare d'alignement de piste est généralement déjà sur l'axe de piste et donc confondue avec son projeté orthogonal.

Selon un aspect optionnel, le module électronique de validation 18 est propre à réitérer cycliquement le calcul de la distance entre la position estimée 28 du radiophare d'alignement de piste et le projeté orthogonal 30 sur l'axe longitudinal de la piste 27 de la position du radiophare d'alignement de piste stockée dans la base de données. Par exemple, une itération est opérée à chaque réception d'une nouvelle position P de l'aéronef 10 tant que la valeur du signal reçu par l'aéronef 10 du radiophare d'alignement de piste est comprise entre deux valeurs de signal prédéterminée où le signal présente une variation linéaire, ledit projeté orthogonal étant validé si la moyenne des distances obtenue est inférieure à une première valeur de distance prédéterminée.

Le module électronique de validation 18 est propre à clore ce premier traitement spécifique de validation de la position du radiophare d'alignement de piste stockée dans la base de données 14 en validant ou non le projeté orthogonal 30, sur l'axe longitudinal de la piste 27, de la position du radiophare d'alignement de piste stockée dans la base de données 14, si la distance est inférieure à une première valeur de distance prédéterminée, par exemple cent mètres.

Ainsi, selon ce premier traitement spécifique, le module électronique de validation 18 du dispositif électronique 16 selon la présente invention est propre à valider longitudinalement à l'axe de piste la position du radiophare d'alignement de piste stockée dans la base de données 14 en vérifiant la cohérence entre le signal LOC reçu par l'aéronef du radiophare d'alignement de piste, la position P de l'aéronef et ladite position du radiophare d'alignement de piste stockée dans la base de données 14.

Par ailleurs, le module électronique de validation 18 du dispositif électronique 16 selon la présente invention est propre à mettre en œuvre, par exemple successivement au premier traitement précité, un deuxième traitement de vérification spécifique lorsque ladite au moins une donnée de position prédéterminée stockée au sein de la base de données 14 correspond à une position du radiophare d'alignement de piste, une position du seuil de la piste SP, et une position du seuil de piste opposé SOP. Autrement dit, le dispositif électronique est propre à vérifier, au cours de ce deuxième traitement de vérification spécifique, non pas une seule donnée de position prédéterminée mais trois données de position distinctes à savoir la position du radiophare d'alignement de piste, la position du seuil de la piste SP, et la position du seuil de piste opposé SOP.

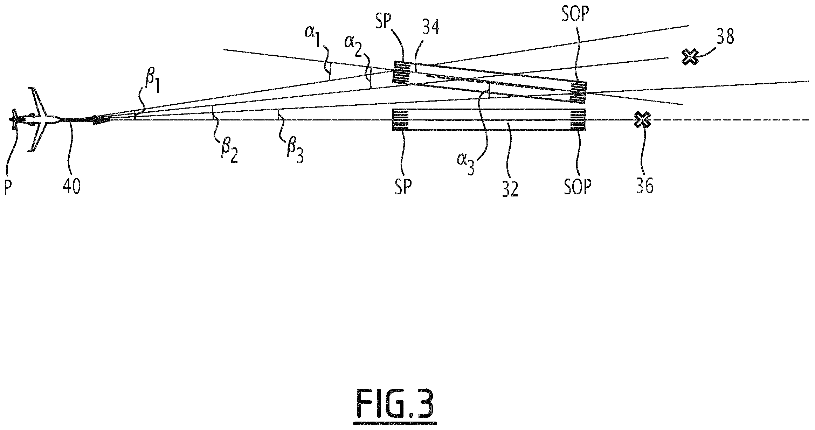

Un tel deuxième traitement spécifique mis en œuvre par le module électronique de validation 18 du dispositif électronique 16 selon la présente invention est notamment illustré par la figure 3 représentant une vue de dessus du sol et de la piste, la piste 32 correspondant à la position de la piste réelle, tandis que la piste 34 représentée sur la figure 3 correspond à la piste propre à être restituée selon un affichage SVS en cas d'incohérence entre les données de positions stockées dans la base de données 14 et la position réelle de la piste.

L'axe de la piste réelle 32 passe par la position réelle 36 du radiophare d'alignement de piste.

Plus précisément, un tel deuxième traitement spécifique comprend, à partir de la position P de l'aéronef 10 et des positions du radiophare d'alignement de piste, du seuil de la piste SP, et du seuil de piste opposé SOP stockés dans la base de données 14, et ce après l'interception par l'aéronef 10 de l'axe de piste lorsque la valeur du signal LOC reçu par l'aéronef 10 du radiophare d'alignement de piste est égale à zéro à un premier facteur d'incertitude prédéterminé près, par exemple un premier facteur d'incertitude égal à $10^{-3}$ DDM, au moins un calcul de relèvement de l'aéronef 10 vers :

- le seuil de piste SP,
- le seuil de piste opposé SOP,
- le radiophare d'alignement de piste.

Pour ce faire, le module électronique de validation 18 est propre à utiliser une formule classique de calcul du relèvement par rapport au nord géographique à partir des deux positions en latitude et longitude associé au relèvement à calculer.

Le module électronique de validation 18 est propre à poursuivre ce deuxième traitement spécifique, selon une première variante, en validant, à une première marge d'erreur prédéterminée près, par exemple une première marge angulaire d'erreur de 0,25°, la position, latéralement à l'axe de la piste, du radiophare d'alignement de piste, et la position, latéralement à l'axe de la piste, du seuil de la piste SP, et la position, latéralement à l'axe de la piste, du seuil de piste opposé SOP stockées dans la base de données 14, en cas d'égalité du cap vrai de la piste 34, obtenu à partir des positions du seuil de piste SP et du seuil de piste opposé SOP stockées dans la base de données 14, avec les relèvements de l'aéronef vers le seuil de piste SP, vers le seuil de piste opposé SOP, et vers le radiophare d'alignement de piste, ce qui revient à vérifier que les angles $\alpha_1$, $\alpha_2$, $\alpha_3$ illustrés sur la figure 3 sont nuls à la première marge angulaire d'erreur près.

Selon une deuxième variante, le module électronique de validation 18 est propre à poursuivre ce deuxième traitement spécifique, selon une deuxième variante, en validant, à une deuxième marge d'erreur prédéterminée près (par exemple également égale à 0,25°), la position 38, latéralement à l'axe de la piste, du radiophare d'alignement de piste, la position, latéralement à l'axe de la piste, du seuil de la piste SP, et la position, latéralement à l'axe de la piste, du seuil de piste opposé SOP stockées dans la base de données, en cas d'égalité de l'angle de la route suivie par l'aéronef 10 fourni par le système 12 de positionnement par satellite lorsque l'aéronef 10 est au préalable établi et stabilisé sur le centre du faisceau du radiophare d'alignement de piste, avec les relèvements de l'aéronef 10 vers le seuil de piste SP, vers le seuil de piste opposé SOP, et vers le radiophare d'alignement de piste dont les trois positions, notamment 38, sont stockées dans la base de données 14, ce qui revient à vérifier que les angles $\beta_1$, $\beta_2$, $\beta_3$ illustrés sur la figure 3 sont nuls à la deuxième marge angulaire d'erreur près.

En cas d'égalité, selon l'une de ces deux variantes du deuxième traitement spécifique, le module électronique de validation 18 certifie alors à la fois que les positions issues de la base de données 14 des deux seuils de piste et la position 38 du radiophare d'alignement de piste sont correctes.

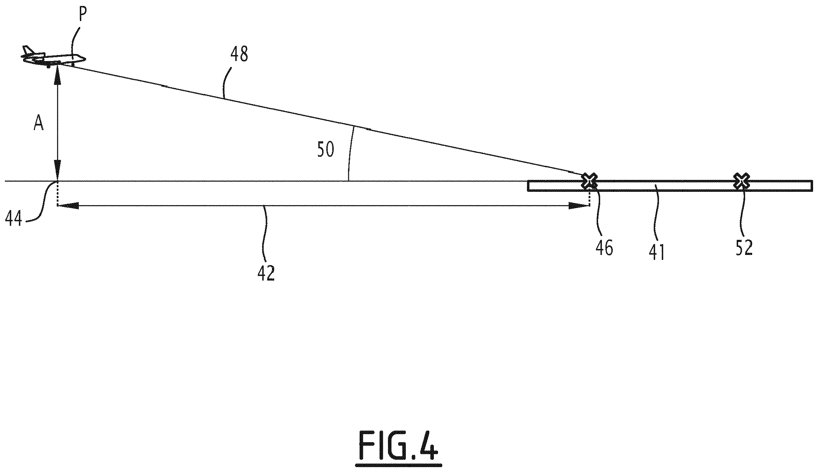

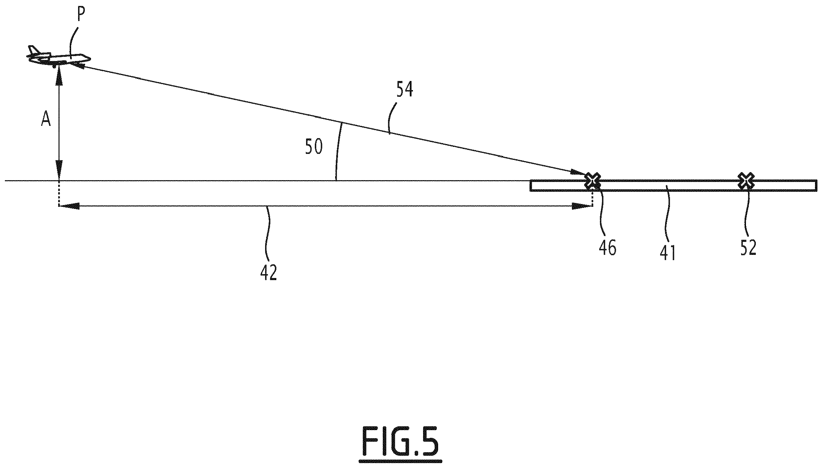

Le module électronique de validation 18 du dispositif électronique 16 selon la présente invention est également propre à mettre en œuvre, par exemple successivement au premier et/ou au deuxième traitements spécifiques précités, un troisième traitement de vérification spécifique lorsque ladite au moins une donnée de position de la base de données 14 à valider correspond à une position du radiophare d'alignement de descente (connu sous le nom anglais GLIDE), et/ou à une position de l'équipement de mesure de distance (connu sous le nom anglais DME de l'anglais *Distance Measuring Equipment*) associé à la piste considérée 41 telle qu'illustrée de côté sur les figures 4 et 5.

Généralement, le radiophare d'alignement de descente (GLIDE) et l'équipement de mesure de distance (DME) sont co-localisés, dans le cas contraire, si la distance entre ces deux balises GLIDE et DME est faible (i.e. inférieure à un seuil de distance prédéterminé), cet écart de distance est propre à être pris en compte par le module électronique de validation 18 par post-traitement pour valider la position de l'équipement de mesure de distance DME, et si la distance entre ces deux balises GLIDE et DME est importante (i.e. supérieure à un seuil de distance prédéterminé), comme par exemple en France à Calvi et Bâle-Mulhouse, le module électronique de validation 18 est propre à ajouter un décalage représentatif de cet écart au signal fourni par l'équipement de mesure de distance DME, à savoir une valeur de distance, de sorte que la distance renvoyée par l'équipement de mesure de distance DME ne correspond pas à celle de l'aéronef 10 à l'équipement de mesure de distance DME mais à la distance de l'avion au radiophare d'alignement de descente GLIDE.

Plus précisément, un tel troisième traitement spécifique est mis en œuvre par le module électronique de validation 18 du dispositif électronique 16, après interception par l'aéronef 10 de l'axe de piste lorsque la valeur du signal reçu par l'aéronef 10 du radiophare d'alignement de piste est égale à zéro à un deuxième facteur d'incertitude prédéterminé près, par exemple égal à $10^{-3}$ DDM, et lorsque la valeur du signal reçu par l'aéronef du radiophare d'alignement de descente est égale à zéro à un troisième facteur d'incertitude prédéterminé près, par exemple également égal à $10^{-3}$ DDM.

Autrement dit, par le module électronique de validation 18 est propre à mettre en œuvre un tel troisième traitement spécifique lorsque l'aéronef 10 est localisé sur l'axe de piste, le troisième traitement spécifique comprenant tout d'abord un calcul ou plusieurs calculs pour des positions P distinctes de l'aéronef 10 d'une première distance 42 au sol entre la position 44 du projeté de l'aéronef 10 au sol et la position 46 du radiophare d'alignement de descente (GLIDE) et/ou la position de l'équipement de mesure de distance (DME) respectivement.

Selon une première variante illustrée par la figure 4, pour mettre en œuvre un tel calcul de la première distance 42, le module électronique de validation 18 est propre à utiliser : l'altitude $Alt_{AC}$ de l'aéronef fournie par le système de positionnement 12, l'altitude $Alt_{GLIDE}$ du radiophare d'alignement de descente et/ou de l'équipement de mesure de distance stockée au sein de la base de données 14, une valeur de pente 48 d'approche de l'aéronef 10 prédéterminée, l'angle de pente 50 étant de 3° généralement.

Selon une deuxième variante illustrée par la figure 5, pour mettre en œuvre un tel calcul de la première distance 42, le module électronique de validation 18 est propre à utiliser directement une distance 54 fournie par l'équipement de mesure de distance (DME) et une valeur de pente d'approche de l'aéronef prédéterminée, par exemple un angle 50 de pente de 3° comme indiqué ci-dessus en relation avec la première variante.

Une telle deuxième variante est notamment mise en œuvre lorsque l'équipement de mesure de distance présente une précision supérieure à un seuil de précision prédéterminé par exemple 0,1 mille nautique.

De plus, au cours de ce troisième traitement spécifique, le module électronique de validation 18 est propre à déterminer une deuxième distance au sol entre la position 44 du projeté de l'aéronef 10 et la position 52 du radiophare d'alignement de descente et/ou de l'équipement de mesure de distance respectivement stockées dans la base de données, à partir des coordonnées en latitude et longitude du radiophare d'alignement de descente et/ou de l'équipement de mesure de distance stockées dans la base de données 14 et de la position P de l'aéronef 10.

Le module électronique de validation 18 est propre à clore ce troisième traitement spécifique de validation de la position du radiophare d'alignement de descente (GLIDE), et/ou de la position de l'équipement de mesure de distance (DME) stockée(s) dans la base de données 14 en les validant lorsque la différence entre la première distance 42 au sol et la deuxième distance au sol entre la position 44 du projeté de l'aéronef 10 et la position 52 du radiophare d'alignement de descente et/ou de l'équipement de mesure de distance respectivement stockées dans la base de données, associées à une même position P de l'aéronef, est inférieure à une deuxième valeur de distance prédéterminée, par exemple vingt mètres, cette deuxième valeur de distance prédéterminée étant propre à être adaptée par post-traitement pour la position de l'équipement de mesure de distance DME si la distance entre ces deux balises GLIDE et DME est importante.

Selon un aspect particulier, pour augmenter la fiabilité de la validation et lever l'ambiguïté associée à une unique itération des sous-traitements du troisième traitement spécifique, la différence, entre la première distance 42 au sol et la deuxième distance au sol entre la position 44 du projeté de l'aéronef 10 et la position 52 du radiophare d'alignement de descente et/ou de l'équipement de mesure de distance respectivement stockées dans la base de données est propre à être déterminée pour plusieurs positions distinctes P de l'aéronef 10, et en utilisant les deux variantes à la fois, pour déterminer une différence moyenne propre à être comparée à la deuxième valeur de distance prédéterminée.

En complément optionnel, le module électronique de validation 18 est également propre à valider la position du seuil de piste sur l'axe longitudinale de la piste.

Pour ce faire, le module électronique de validation 18 est propre à mettre en œuvre au préalable le calcul de la distance longitudinale sur l'axe de la piste entre le seuil de la piste et le radiophare d'alignement de descente à partir des coordonnées en latitude et longitude du seuil de piste et du radiophare d'alignement de descente stockées dans la base de données, et, en cas de validation de la position, longitudinalement à l'axe de la piste, du radiophare d'alignement de descente conformément au troisième traitement spécifique précité, la validation, à une troisième marge d'erreur prédéterminée près, par exemple une telle marge d'erreur est de vingt mètres, de la position, longitudinalement à l'axe de la piste, du seuil de la piste stockée dans la base de données en cas d'égalité, à une valeur de distance longitudinale prédéterminée, par exemple quatre cents mètres, de la distance longitudinale sur l'axe de la piste entre le seuil de la piste et le radiophare d'alignement de descente.

Un tel calcul de la distance longitudinale sur l'axe de la piste entre le seuil de la piste et le radiophare d'alignement de descente à partir des coordonnées en latitude et longitude du seuil de piste et du radiophare d'alignement de descente stockées dans la base de données, est donc selon un aspect particulier mis en œuvre au préalable par exemple une fois pour toute à la génération de la base de données 14, et la validation de la position longitudinale du radiophare d'alignement de descente (GLIDE) au cours du troisième traitement spécifique valide alors automatiquement la position longitudinale du seuil de piste SP.

En complément optionnel, le module électronique de validation 18 est également propre à calculer la distance orthogonale du radiophare d'alignement de descente (GLIDE) à l'axe de piste et à vérifier que cette distance orthogonale est comprise dans une plage de valeurs prédéterminées, par exemple entre vingt-cinq et cent mètres. Un tel traitement de vérification complémentaire optionnelle est propre à être effectué une fois pour toute à la génération de la base de données 14, et la validation de la position latérale des deux seuils de piste SP et SOP au cours du deuxième traitement spécifique précité est propre à valider automatiquement la position du radiophare d'alignement de descente (GLIDE) latéralement à l'axe de piste.

Un tel traitement propre à être mis en œuvre par le module électronique de validation 18 est optionnelle, car la distance orthogonale du radiophare d'alignement de descente (GLIDE) à l'axe de piste n'est pas, à l'heure actuelle, un distance critique en termes d'intégrité. Pour la même raison, le module électronique de validation 18 est propre à valider optionnellement la position du seuil de piste opposé SOP, longitudinalement à l'axe de piste, cette position n'étant pas, à l'heure actuelle, critique en termes d'intégrité, en vérifiant lors de la génération de la base de données 14 la cohérence entre la longueur de piste et les deux seuils de piste SP et SOP.

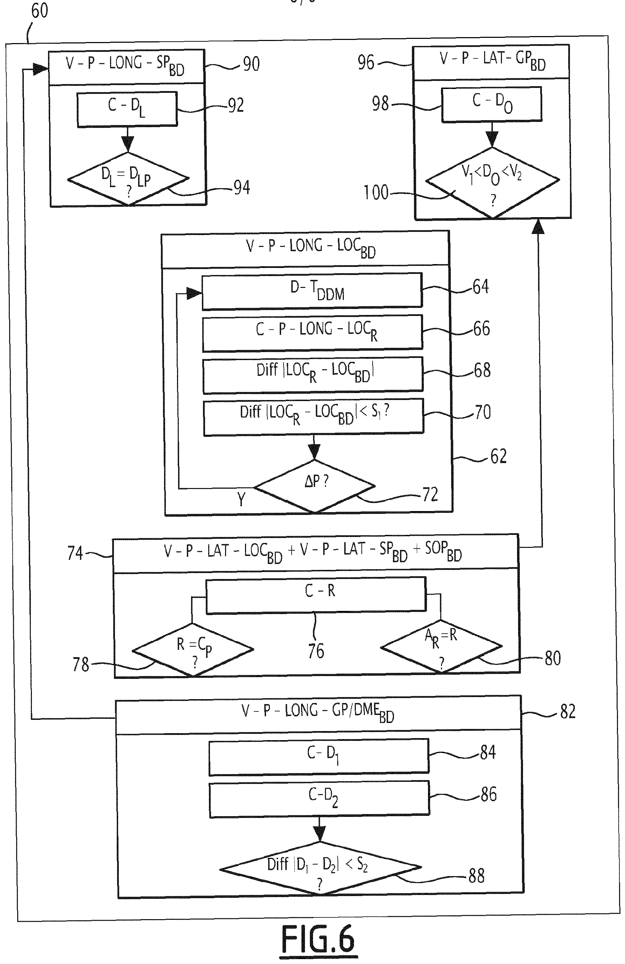

Un exemple non limitatif de fonctionnement du dispositif électronique de validation 16 décrit précédemment va désormais être expliqué à l'aide de la figure 6 représentant un exemple d'organigramme d'un procédé de validation selon l'invention.

Selon cet exemple de réalisation, lors d'une première étape 62 (ou premier traitement de validation spécifique) mise en œuvre préalablement à l'interception par l'aéronef 10 de l'axe de piste, lorsque la valeur du signal reçu par l'aéronef 10 du radiophare d'alignement de piste est comprise entre deux premières valeurs de signal prédéterminées où le signal présente une variation linéaire, le module électronique de validation 18 valide V-P-LONG-LOC$_{BD}$, longitudinalement à la piste considérée, la position du radiophare d'alignement de piste et pour ce faire met en œuvre plusieurs sous-étapes. Lors d'une première sous-étape 64 de la validation, longitudinalement à la piste considérée, de la position du radiophare d'alignement de piste, le module électronique de validation 18 met en œuvre la détermination D-T$_{DDM}$ du point virtuel TDDM précité et illustré sur la figure 2. Puis, lors de la sous-étape 66, le module électronique de validation 18 calcule C-P-LONG-LOC$_R$ la position 28 estimée du radiophare d'alignement de piste. Ensuite, lors de la sous-étape 68, le module électronique de validation 18 détermine la distance Diff ILOC$_R$-LOC$_{BD}$I entre la position estimée du radiophare d'alignement de piste et le projeté orthogonal sur l'axe longitudinal de la piste de la position du radiophare d'alignement de piste stockée dans la base de données. Lors d'une sous-étape suivante 70, cette distance Diff ILOC$_R$- LOC$_{BD}$I est comparée par le module électronique de validation 18 à une première valeur de distance S$_1$, et en cas d'infériorité, la cohérence entre le signal reçu par l'aéronef 10 du radiophare d'alignement de piste, la position P de l'aéronef et la valeur de la position du radiophare d'alignement de piste stockée dans la base de données 14 est vérifiée longitudinalement à la piste considérée. Selon un aspect optionnel, lors de la sous-étape 72, l'absence de variation de la position P de l'aéronef est cycliquement vérifiée et en cas de réception d'une nouvelle position P de l'aéronef, les sous-étapes 64, 68, 70 et 72 sont réitérées.

Lors d'une étape 74 (ou deuxième traitement de validation spécifique) mise en œuvre après l'interception par l'aéronef 10 de l'axe de piste lorsque la valeur du signal reçu par l'aéronef 10 du radiophare d'alignement de piste est égale à zéro à un premier facteur d'incertitude prédéterminé près, le module électronique de validation 18 valide V-P-LAT-LOC$_{BD}$+ V-P-LAT-SP$_{BD}$ +SOP$_{BD}$, latéralement à la piste considérée, à la fois une position du radiophare d'alignement de piste, une position du seuil de la piste, et une position du seuil de piste opposé et met en œuvre pour ce faire plusieurs sous-étapes. Lors de la sous-étape 76, le module électronique de validation 18 met en œuvre un calcul de relèvement C-R de l'aéronef 10 vers le seuil de piste SP, le seuil de piste opposé SOP, et le radiophare d'alignement de piste (LOC). Lors de la sous-étape 78, selon une première variante, le module électronique de validation 18 vérifie l'égalité, à une première marge d'erreur prédéterminée près, du cap vrai C$_P$ de la piste, obtenu à partir du seuil de piste SP et du seuil de piste opposé SOP, avec les relèvements R de l'aéronef vers le seuil de piste SP, vers le seuil de piste opposé SOP, vers le radiophare d'alignement de piste. Lors de la sous-étape 80, selon une deuxième variante, complémentaire ou alternative de la première variante, le module électronique de validation 18 vérifie l'égalité, à une deuxième marge d'erreur prédéterminée près, le cap de la route ou l'angle $A_R$ formé par la route avec un axe orienté vers le Nord suivie par l'aéronef 10 fourni par le système de positionnement 12 par satellite lorsque l'aéronef 10 est au préalable établi et stabilisé sur le centre du faisceau du radiophare d'alignement de piste, avec les relèvements de l'aéronef 10 vers le seuil de piste SP, vers le seuil de piste opposé SOP, vers le radiophare d'alignement de piste. En cas d'égalité selon l'une des ou les deux variantes, la cohérence entre le signal reçu par l'aéronef 10 du radiophare d'alignement de piste, la position P de l'aéronef et la valeur de la position du radiophare d'alignement de piste, est vérifiée latéralement à la piste considérée, ainsi que la position du seuil de la piste et du seuil de piste opposé.

Lors d'une étape 82 (ou troisième traitement de validation spécifique) mise en œuvre après l'interception par l'aéronef 10 de l'axe de piste lorsque la valeur du signal reçu par l'aéronef du radiophare d'alignement de piste est égale à zéro à un deuxième facteur d'incertitude prédéterminé près, et lorsque la valeur du signal reçu par l'aéronef du radiophare d'alignement de descente est égale à zéro à un troisième facteur d'incertitude prédéterminé près, le module électronique de validation 18 valide V-P-LONG-GP/DME$_{BD}$ une position (52) du radiophare d'alignement de descente, et/ou une position de l'équipement de mesure de distance et met en œuvre pour ce faire plusieurs sous-étapes. Lors de la sous-étape 84, le module électronique de validation 18 calcule C-D$_1$ une première distance au sol entre l'aéronef 10 et le radiophare d'alignement de descente et/ou l'équipement de mesure de distance respectivement en utilisant une distance fournie par l'équipement de mesure de distance et une valeur de pente d'approche de l'aéronef prédéterminée, ou en utilisant l'altitude de l'aéronef fournie par le système de positionnement 12, une altitude du radiophare d'alignement de descente et/ou de l'équipement de mesure de distance stockée au sein de la base de données, et une valeur de pente d'approche de l'aéronef prédéterminée. Lors de la sous-étape 86, le module électronique de validation 18 calcule C-D$_2$ une deuxième distance au sol entre l'aéronef et le radiophare d'alignement de descente et/ou l'équipement de mesure de distance respectivement, à partir des coordonnées en latitude et longitude du radiophare d'alignement de descente et/ou de l'équipement de mesure de distance stockées dans la base de données, de la position P de l'aéronef. Lors de la sous-étape 88, le module électronique de validation 18 détermine la différence Diff |D$_1$-D$_2$| entre la première distance D$_1$ et la deuxième distance D$_2$ et la compare à une deuxième valeur de distance S$_2$, et en cas d'infériorité, la cohérence entre le signal reçu par l'aéronef 10 du radiophare d'alignement de descente (GLIDE) et/ou de l'équipement de mesure de distance (DME), la position P de l'aéronef 10 et la valeur de la position du radiophare d'alignement de descente (GLIDE) et/ou de l'équipement de mesure de distance (DME) stockée dans la base de données 14 est vérifiée.

Lors d'une étape optionnelle 90, le module électronique de validation 18 est propre à valider V-P-LONG-SP$_{BD}$ la position du seuil de piste longitudinalement à l'axe de piste considérée, et met en œuvre pour ce faire plusieurs sous-étapes. Lors de la sous-étape 92, le module électronique de validation 18 met en œuvre, après génération de la base de données 14, le calcul C-D$_L$ de la distance longitudinale sur l'axe de la piste entre le seuil SP de la piste et le radiophare d'alignement de descente (GLIDE) à partir des coordonnées en latitude et longitude du seuil de piste et du radiophare d'alignement de descente stockées dans la base de données. Lors de la sous-étape 94, en cas de validation 82 de la position, longitudinalement à l'axe de la piste, du radiophare d'alignement de descente, le module électronique de validation 18 met en œuvre, la validation, à une troisième marge d'erreur prédéterminée près, de la position, longitudinalement à l'axe de la piste, du seuil de la piste stockée dans la base de données en cas d'égalité, à une valeur D$_{LP}$ de distance longitudinale prédéterminée, de la distance longitudinale sur l'axe de la piste entre le seuil de la piste et le radiophare d'alignement de descente.

Egalement à titre optionnel, lors d'une étape 96, le module électronique de validation 18 est propre à valider V-P-LAT-GP$_{BD}$, latéralement à l'axe de la piste considérée, la position du radiophare d'alignement de descente et met en œuvre pour ce faire plusieurs sous-étapes. Lors d'une sous étape 98, le module électronique de validation 18 calcule la distance orthogonale D$_O$ à l'axe de piste du radiophare d'alignement de descente à partir des coordonnées en latitude et longitude du radiophare d'alignement de descente stockées dans la base de données 14, et lors d'une sous-étape 100, le module électronique de validation 18 vérifie que cette distance orthogonale D$_O$ est comprise dans une plage de valeurs prédéterminées. Une telle étape de vérification complémentaire optionnelle est propre à être effectuée une fois pour toute à la génération de la base de données 14, et la validation 74 de la position latérale des deux seuils de piste SP et SOP au cours du deuxième traitement spécifique précité est propre à valider automatiquement la position du radiophare d'alignement de descente (GLIDE) latéralement à l'axe de piste.

On conçoit alors que la présente invention présente un certain nombre d'avantages.

En effet, l'invention permet de valider l'exactitude d'au moins une donnée de position prédéterminée stockée dans une base de données de l'aéronef, ladite au moins une donnée de position étant propre à être utilisée pour sécuriser le fonctionnement (i.e. l'affichage fourni est exact, notamment l'affichage de la piste d'atterrissage) d'un système de vision synthétique de l'aéronef, notamment selon la technique SVS, et/ou pour superviser une trajectoire d'approche de l'aéronef notamment selon une approche SVGS.

En d'autres termes, grâce à la présente invention l'intégrité de la base de données embarquée à bord de l'aéronef est renforcée et ce sans recourir à deux bases de données indépendantes.

**Revendications**

1. Procédé (60) de validation d'au moins une donnée de position prédéterminée stockée au sein d'une base de données d'un aéronef (10), l'aéronef comprenant un système (12) de positionnement par satellite, la base de données (14) contenant au moins une position de balise de radionavigation et une position de seuil de piste et de seuil de piste opposé d'une piste, sur laquelle l'aéronef est destiné à atterrir, le procédé de validation étant mis en œuvre par un dispositif électronique (16) de validation embarqué à bord de l'aéronef (10) et propre à accéder à la base de données (14), la validation (62, 74, 82, 90) de ladite au moins une donnée de position prédéterminée comprenant une vérification de cohérence entre au moins :

   - un signal reçu par l'aéronef d'une balise de radionavigation associée à ladite au moins une donnée de position prédéterminée, et
   - la position (P) de l'aéronef fournie par le système de positionnement par satellite, et
   - la valeur de la donnée de position prédéterminée stockée au sein de la base de données.

2. Procédé (60) de validation selon la revendication 1, dans lequel ladite au moins une donnée de position prédéterminée stockée au sein de la base de données (14) correspond à un élément appartenant au groupe comprenant au moins :

   - une position d'un radiophare d'alignement de piste associé à ladite piste,
   - une position (52) d'un radiophare d'alignement de descente associé à ladite piste,
   - une position (52) d'un équipement de mesure de distance associé à ladite piste,
   - une position du seuil de la piste (SP),
   - une position du seuil de piste opposé (SOP)

3. Procédé (60) de validation selon la revendication 2, dans lequel lorsque ladite au moins une donnée de position prédéterminée stockée au sein de la base de données (14) correspond à la position du radiophare d'alignement de piste, la vérification de cohérence comprend, préalablement à l'interception par l'aéronef (10) de l'axe de piste, lorsque la valeur du signal reçu par l'aéronef (10) du radiophare d'alignement de piste est comprise entre deux premières valeurs de signal prédéterminées où le signal présente une variation linéaire :

   - la détermination d'un point virtuel (TDDM) localisé sur la perpendiculaire à l'axe de piste passant par le seuil de piste, la distance au sol de ce point virtuel au centre du seuil de piste étant proportionnelle à la valeur du signal reçu par l'aéronef du radiophare d'alignement de piste,
   - le calcul d'une position (28) estimée du radiophare d'alignement de piste correspondant à l'intersection de la première droite passant par le point virtuel (TDDM) et la position (P) de l'aéronef avec la deuxième droite passant par le seuil de la piste (SP) et le seuil de piste opposé (SOP),
   - la détermination d'une distance entre la position (28) estimée du radiophare d'alignement de piste et le projeté orthogonal (30) sur l'axe longitudinal de la piste de la position du radiophare d'alignement de piste stockée dans la base de données,
   - la validation du projeté orthogonal, sur l'axe longitudinal de la piste, de la position du radiophare d'alignement de piste stockée dans la base de données si la distance est inférieure à une première valeur de distance prédéterminée.

4. Procédé de validation selon la revendication 3, dans lequel le calcul de la distance entre la position (28) estimée du radiophare d'alignement de piste et le projeté (30) orthogonal sur l'axe longitudinal de la piste de la position du radiophare d'alignement de piste stockée dans la base de données est réitéré cycliquement.

5. Procédé (60) de validation selon l'une quelconque des revendications 2 à 4, dans lequel lorsque ladite au moins une donnée de position prédéterminée stockée au sein de la base de données correspond à :

   - une position du radiophare d'alignement de piste (38), et
   - une position du seuil de la piste (SP), et
   - une position du seuil de piste opposé (SOP),

   la vérification de cohérence comprend, à partir de la position (P) de l'aéronef (10), et après l'interception par l'aéronef (10) de l'axe de piste lorsque la valeur du signal reçu par l'aéronef (10) du radiophare d'alignement de piste est égale à zéro à un premier facteur d'incertitude prédéterminé près, au moins un calcul de relèvement de l'aéronef (10) vers :

   - le seuil de piste (SP),
   - le seuil de piste opposé (SOP),
   - le radiophare d'alignement de piste.

6. Procédé (60) de validation selon la revendication 5, dans lequel la vérification de cohérence comprend en outre :

   la validation, à une première marge d'erreur prédéterminée près, de la position (38), latéralement à l'axe de la piste, du radiophare d'alignement de piste, et de la position, latéralement à l'axe de la piste, du seuil de la piste, et de la position, latéralement à l'axe de la piste, du seuil de piste opposé stockées dans la base de données, en cas d'égalité du :

- cap vrai de la piste, obtenu à partir du seuil de piste (SP) et du seuil de piste opposé (SOP), avec
- les relèvements de l'aéronef vers le seuil de piste (SP), vers le seuil de piste opposé (SOP), vers le radiophare d'alignement de piste,

et/ou
la validation, à une deuxième marge d'erreur prédéterminée près, de la position (38), latéralement à l'axe de la piste, du radiophare d'alignement de piste, et de la position, latéralement à l'axe de la piste, du seuil de la piste (SP), et de la position, latéralement à l'axe de la piste, du seuil de piste opposé (SOP) stockées dans la base de données, en cas d'égalité du :

- cap d'une route suivie par l'aéronef fourni par le système de positionnement par satellite lorsque l'aéronef est au préalable établi et stabilisé sur le centre du faisceau du radiophare d'alignement de piste, avec
- les relèvements de l'aéronef (10) vers le seuil de piste (SP), vers le seuil de piste opposé (SOP), vers le radiophare d'alignement de piste.

7. Procédé (60) de validation selon l'une quelconque des revendications 2 à 6, dans lequel lorsque ladite au moins une donnée de position correspond à :

- une position (52) du radiophare d'alignement de descente, et/ou
- une position (52) de l'équipement de mesure de distance,

la vérification de cohérence comprend,
après l'interception par l'aéronef (10) de l'axe de piste lorsque la valeur du signal reçu par l'aéronef du radiophare d'alignement de piste est égale à zéro à un deuxième facteur d'incertitude prédéterminé près, et
lorsque la valeur du signal reçu par l'aéronef du radiophare d'alignement de descente est égale à zéro à un troisième facteur d'incertitude prédéterminé près,
un calcul ou plusieurs calculs pour des positions distinctes de l'aéronef (10) :

- d'une première distance au sol entre l'aéronef

(10) et le radiophare d'alignement de descente et/ou l'équipement de mesure de distance respectivement en utilisant une distance fournie par l'équipement de mesure de distance et une valeur de pente d'approche de l'aéronef prédéterminée ou en utilisant :

- l'altitude de l'aéronef fournie par le système de positionnement,
- une altitude du radiophare d'alignement de descente et/ou de l'équipement de mesure de distance stockée au sein de la base de données,
- une valeur de pente d'approche de l'aéronef prédéterminée, et

- d'une deuxième distance au sol entre l'aéronef et le radiophare d'alignement de descente et/ou l'équipement de mesure de distance respectivement, à partir :

- des coordonnées en latitude et longitude du radiophare d'alignement de descente et/ou de l'équipement de mesure de distance stockées dans la base de données,
- de la position de l'aéronef,

et la validation de la position, longitudinalement à l'axe de la piste, du radiophare d'alignement de descente et/ou de l'équipement de mesure de distance respectivement, stockées dans la base de données, lorsque la différence, ou la différence moyenne, entre la première distance au sol et la deuxième distance au sol associées à une même position de l'aéronef, est inférieure à une deuxième valeur de distance prédéterminée.

8. Procédé (60) de validation selon la revendication 7, dans lequel la vérification de cohérence comprend en outre le calcul au préalable de la distance longitudinale sur l'axe de la piste entre le seuil de la piste et le radiophare d'alignement de descente à partir des coordonnées en latitude et longitude du seuil de piste et du radiophare d'alignement de descente stockées dans la base de données, et, en cas de validation de la position, longitudinalement à l'axe de la piste, du radiophare d'alignement de descente, la validation, à une troisième marge d'erreur prédéterminée près, de la position, longitudinalement à l'axe de la piste, du seuil de la piste stockée dans la base de données en cas d'égalité, à une valeur de distance longitudinale prédéterminée, de la distance longitudinale sur l'axe de la piste entre le seuil de la piste et le radiophare d'alignement de descente.

9. Programme d'ordinateur comportant des instructions logicielles qui, lorsqu'elles sont exécutées par un ordinateur, mettent en œuvre un procédé selon l'une quelconque des revendications 1 à 8.

10. Dispositif électronique (16) de validation d'au moins une donnée de position prédéterminée stockée au sein d'une base de données (14) d'un aéronef (10) comprenant un système (12) de positionnement par satellite, la base de données (14) contenant au moins une position de balise de radionavigation et une position de seuil de piste (SP) et de seuil de piste opposé d'une piste (SOP), sur laquelle l'aéronef (10) est destiné à atterrir, le dispositif électronique (16) de validation embarqué à bord de l'aéronef (10) étant propre à accéder à la base de données (14) et **caractérisé en ce qu'**il comprend au moins un module (18) électronique de validation de ladite au moins une donnée de position prédéterminée, le module électronique de validation (18) étant propre à mettre en œuvre une vérification de cohérence entre au moins :

- un signal reçu par l'aéronef (10) d'une balise de radionavigation associée à ladite au moins une donnée de position prédéterminée, et
- la position (P) de l'aéronef fournie par le système (12) de positionnement par satellite, et
- la valeur de la donnée de position prédéterminée stockée au sein de la base de données.

FIG.1

FIG.2

FIG.3

FIG.4

EP 3 770 626 A1

FIG.5

EP 3 770 626 A1

60

V – P – LONG – SP$_{BD}$ —— 90

C – D$_L$ —— 92

D$_L$ = D$_{LP}$ ? —— 94

96 —— V – P – LAT– GP$_{BD}$

98 —— C – D$_O$

V$_1$<D$_O$<V$_2$ ?

100 ——

V – P – LONG – LOC$_{BD}$

D– T$_{DDM}$ —— 64

C – P – LONG – LOC$_R$ —— 66

Diff |LOC$_R$ – LOC$_{BD}$| —— 68

Diff |LOC$_R$ – LOC$_{BD}$|< S$_1$ ? —— 70

—— 62

ΔP ? —— 72

Y

74 —— V – P – LAT – LOC$_{BD}$ + V – P – LAT – SP$_{BD}$ + SOP$_{BD}$

C – R

R =C$_P$ ? —— 78

76

A$_R$=R ? —— 80

V – P – LONG – GP/DME$_{BD}$ —— 82

C– D$_1$ —— 84

C–D$_2$ —— 86

Diff |D$_1$ – D$_2$| < S$_2$ ? —— 88

# FIG.6

Europäisches
Patentamt

European
Patent Office

Office européen
des brevets

**RAPPORT DE RECHERCHE EUROPEENNE**

Numéro de la demande

EP 20 18 7119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 852 683 A1 (AIRBUS FRANCE [FR]) 24 septembre 2004 (2004-09-24) | 1,2,9,10 | INV. G01S1/14 |
| A | * page 7, ligne 3 - page 13, ligne 14; figure 1 * ----- | 3-8 | G01S1/02 G01S19/15 |
| A | US 2010/026525 A1 (FEYEREISEN THEA L [US] ET AL) 4 février 2010 (2010-02-04) * alinéa [0053] - alinéa [0055]; figure 3 * ----- | 1-10 | |
| A | US 7 218 278 B1 (THALES SA [FR]) 15 mai 2007 (2007-05-15) * colonne 5, ligne 41 - colonne 6, ligne 8; figure 3 * ----- | 1-10 | |
| A | US 2006/227014 A1 (GANNON AARON J [US]) 12 octobre 2006 (2006-10-12) * alinéa [0032] - alinéa [0033]; figures 2,3A,3B * ----- | 1-10 | |

| | DOMAINES TECHNIQUES RECHERCHES (IPC) |
|---|---|
| | G01S G01C |

Le présent rapport a été établi pour toutes les revendications

| Lieu de la recherche | Date d'achèvement de la recherche | Examinateur |
|---|---|---|
| Munich | 13 novembre 2020 | Fanjul Caudevilla, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 18 7119

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2020

| Document brevet cité au rapport de recherche | | | Date de publication | Membre(s) de la famille de brevet(s) | | | Date de publication |
|---|---|---|---|---|---|---|---|
| FR | 2852683 | A1 | 24-09-2004 | CA | 2457278 | A1 | 19-09-2004 |
| | | | | EP | 1464576 | A2 | 06-10-2004 |
| | | | | FR | 2852683 | A1 | 24-09-2004 |
| | | | | US | 2004245408 | A1 | 09-12-2004 |
| US | 2010026525 | A1 | 04-02-2010 | EP | 2149783 | A1 | 03-02-2010 |
| | | | | US | 2010026525 | A1 | 04-02-2010 |
| US | 7218278 | B1 | 15-05-2007 | CA | 2484141 | A1 | 17-04-2005 |
| | | | | DE | 602004002257 | T2 | 05-04-2007 |
| | | | | EP | 1524191 | A1 | 20-04-2005 |
| | | | | FR | 2861051 | A1 | 22-04-2005 |
| | | | | US | 2007090993 | A1 | 26-04-2007 |
| US | 2006227014 | A1 | 12-10-2006 | EP | 1866888 | A1 | 19-12-2007 |
| | | | | TW | 200706835 | A | 16-02-2007 |
| | | | | US | 2006227014 | A1 | 12-10-2006 |
| | | | | WO | 2006107749 | A1 | 12-10-2006 |

EPO FORM P0460

Pour tout renseignement concernant cette annexe : voir Journal Officiel de l'Office européen des brevets, No.12/82